# EUROPÄISCHE PATENTSCHRIFT

(11) **EP 3 385 045 B1**
(45) Veröffentlichungstag und Bekanntmachung des Hinweises auf die Patenterteilung: **26.01.2022**
(21) Anmeldenummer: 17400017.4
(22) Anmeldetag: 04.04.2017
(51) Int. Cl.: B27B 17/14

(54) **MOTORKETTENSÄGE**
POWER CHAIN SAW
TRONÇONNEUSE À CHAÎNE

(43) Veröffentlichungstag der Anmeldung: 10.10.2018
(73) Patentinhaber: Andreas Stihl AG & Co. KG, 71336 Waiblingen (DE)
(72) Erfinder: Gerstenberger, Oliver, 71254 Ditzingen (DE); Zimmermann, Helmut, 73663 Berglen (DE); Fricker, Andreas, 78166 Donaueschingen (DE)
(74) Vertreter: Reinhardt, Annette

(56) Entgegenhaltungen:
- EP-A1- 2 774 733
- US-A- 3 636 995
- US-A- 5 491 899

## Beschreibung

Die Erfindung betrifft eine Motorkettensäge der im Oberbegriff des Anspruchs 1 angegebenen Gattung.

Aus der DE 38 43 459 A1 ist eine Motorkettensäge mit einer Führungsschiene bekannt, wobei die Führungsschiene an einem Ende zwischen dem Gehäuse und einem Spannteil verspannt am Gehäuse gehalten ist. Zum Spannen der Sägekette ist die Führungsschiene bei gelöstem Spannteil in Längsrichtung mittels einer Kettenspannvorrichtung verstellbar. Mindestens eine der einander zugewandten Flächen zwischen dem Führungsschienenende und dem Gehäuse bzw. dem Spannteil ist reibwerterhöhend behandelt. Dadurch können bei gleicher Klemmkraft höhere Kräfte auf die Einspannung wirken, ohne dass eine Versstellung der Führungsschiene erfolgt.

In der EP 2 774 733 A1 ist eine Kettensäge gemäß dem Oberbegriff des Anspruchs 1 mit einer Führungsschiene gezeigt. Die Führungsschiene ist mittels einer Flügelmutter fixiert. Wird die Flügelmutter gelöst, wird die Führungsschiene über eine Kettenschnellspannvorrichtung mit Spiralfeder in Längsrichtung der Führungsschiene nach vorne geschoben. Dabei wird die Sägekette gespannt.

Es hat sich gezeigt, dass bei Motorkettensägen mit einer Schnellspannvorrichtung für die Sägekette nur geringe an der Führungsschiene wirkende Kräfte auf das Gehäuse übertragen werden können. Bei Motorkettensägen, bei welchen hohe an der Führungsschiene wirkende Kräfte auf das Gehäuse übertragen werden können, ist dagegen das Spannen der Sägekette kompliziert und zeitaufwendig.

Der Erfindung liegt die Aufgabe zugrunde, eine Motorkettensäge der gattungsgemäßen Art zu schaffen, die ein einfaches und schnelles Spannen der Sägekette sowie eine hohe Kraftübertragung von der Führungsschiene auf das Gehäuse ermöglicht.

Diese Aufgabe wird durch eine Motorkettensäge mit den Merkmalen des Anspruchs 1 gelöst.

Es ist vorgesehen, dass die Motorkettensäge ein feststehendes Teil und ein bewegliches Teil besitzt, wobei das feststehende Teil den Antriebsmotor und das bewegliche Teil die Führungsschiene umfasst. Die Führungsschiene ist an einem Ende zwischen dem feststehenden Teil und einem Spannelement verspannt am feststehenden Teil gehalten. Das bewegliche Teil zum Spannen der Sägekette ist bei gelöstem Spannelement in einer Längsrichtung des beweglichen Teils gegenüber dem feststehenden Teil verschiebbar. Die Motorkettensäge besitzt eine mit dem feststehenden Teil in Längsrichtung fest verbundene Anschlagsfläche und mit dem feststehenden Teil in Längsrichtung fest verbundene Spannfläche des Spannelements. Die Spannfläche des Spannelements kann beispielsweise eine Stirnseite einer Spannmutter oder eine Stirnseite eines Gehäusedeckels sein. Die Motorkettensäge besitzt mindestens zwei mit dem beweglichen Teil in Längsrichtung der Führungsschiene fest verbundene Kontaktflächen. Eine Kontaktfläche der mindestens zwei Kontaktflächen liegt an der Anschlagsfläche an und eine weitere Kontaktfläche der mindestens zwei Kontaktflächen an der Spannfläche. Zwischen der Anschlagsfläche und der Spannfläche sind mindestens eine zusätzliche mit dem feststehenden Teil in Längsrichtung fest verbundene Kontaktfläche und mindestens eine zusätzliche mit dem beweglichen Teil in Längsrichtung fest verbundene Kontaktfläche angeordnet. Alle Kontaktflächen liegen im Kraftfluss vom Spannelement zum feststehenden Teil hintereinander.

Die Ausdrücke "beweglicher Teil" und "feststehender Teil" bezeichnen vorliegend keine einzelnen Bauteile, sondern Baugruppen, die aus einer Mehrzahl miteinander verbundener Bauteile gebildet sein können.

Es ist vorteilhaft vorgesehen, dass das Spannelement gegen den feststehenden Teil gespannt ist. Vorteilhaft ist das Spannelement über die Klemmelemente und die Führungsschiene gegen den feststehenden Teil gespannt.

Beim Anliegen der Kontaktflächen des beweglichen Teils an der Anschlagsfläche, der Spannfläche und/oder den Kontaktflächen des feststehenden Teils bilden sich Reibkontaktflächen. Die Reibkontaktflächen sind folglich aus sich berührenden Flächen gebildet. An den Reibkontaktflächen werden bei verspanntem Spannelement Reibkräfte zwischen dem feststehenden Teil und dem beweglichen Teil in Längsrichtung übertragen. Durch die Erhöhung der Anzahl der Kontaktflächen des feststehenden Teils und des beweglichen Teils erhöht sich auch die Anzahl der Reibkontaktflächen. Mit der Erhöhung der Anzahl der Reibkontaktflächen erhöht sich die auf das bewegliche Teil wirkende und auf den feststehenden Teil zu übertragende maximale Kraft. Selbst bei im Betrieb der Motorkettensäge auftretenden hohen Belastungen auf die Führungsschiene verschiebt sich diese gegenüber dem feststehenden Teil nicht. Die maximale übertragbare Reibkraft ergibt sich aus der Höhe der vom Spannelement erzeugten Klemmkraft, der Anzahl der Reibkontaktflächen sowie der Höhe des Reibkoeffizienten der Reibkontaktflächen. Je höher die Klemmkraft, je höher die Anzahl der Reibkontaktflächen und je höher der Reibwert der Reibkontaktflächen, desto höher ist die maximal übertragbare Reibkraft von dem beweglichen Teil auf das feststehende Teil. Bei entsprechend hoher Anzahl der Reibkontaktflächen können dadurch auch Reibkontaktflächen mit vergleichsweise geringem Reibwert, insbesondere Reibkontaktflächen ohne reibwerterhöhende Beschichtung, vorgesehen sein.

Bei gelöstem Spannelement kann das bewegliche Teil, insbesondere die Führungsschiene, gegenüber dem feststehenden Teil, insbesondere dem Antriebsmotor, einfach und schnell in Längsrichtung verschoben werden. Da der Kraftfluss zwischen Spannfläche und Anlagefläche der Motorkettensäge unterbrochen ist, kann zwischen dem beweglichen Teil und dem feststehenden Teil keine Reibkraft übertragen werden. Daher kann das bewegliche Teil gegenüber dem feststehenden Teil in Längsrichtung verschoben werden und die auf der Führungsschiene geführte Sägekette schnell und einfach gespannt werden. Auch der Austausch einer Sägekette ist dadurch einfach und schnell möglich. Vorteilhaft umfasst der feststehende Teil ein Gehäuse der Motorkettensäge. Der feststehende Teil umfasst vorteilhaft einen Gehäusedeckel, insbesondere einen Kettenraddeckel der Motorkettensäge. In alternativer Ausführung kann auch vorgesehen sein, dass der bewegliche Teil den Gehäusedeckel umfasst.

Vorteilhaft sind zwischen Anschlagsfläche und Spannfläche jeweils mindestens vier, insbesondere mindestens acht, zusätzliche, mit dem feststehenden Teil fest verbundene Kontaktflächen und zusätzliche, mit dem beweglichen Teil fest verbundene Kontaktflächen angeordnet. Mit zunehmender Anzahl der miteinander in Kontakt stehenden Kontaktflächen des beweglichen Teils und des feststehenden Teils erhöht sich die maximale Reibkraft, die von dem beweglichen Teil auf das feststehende Teil übertragen werden kann.

Es ist vorteilhaft vorgesehen, dass die Kontaktflächen bei gespanntem Spannelement parallel zur Längsebene der Führungsschiene verlaufen. In einem auf einem horizontal verlaufenden, ebenen Boden abgestellten Zustand der Motorkettensäge verläuft die Längsebene der Führungsschiene durch die Längsrichtung der Führungsschiene und steht senkrecht zum Boden. Vorteilhaft sind die Kontaktflächen in einer Schnittebene senkrecht zur Längsebene nebeneinander angeordnet. Durch die kompakte Anordnung der Kontaktflächen nebeneinander kann bei nur geringem Bauraum eine Erhöhung der maximal zu übertragenden Reibkräfte zwischen beweglichem Teil und feststehendem Teil erfolgen.

Vorteilhaft umfasst die Motorkettensäge mindestens ein erstes Klemmelement und ein zweites Klemmelement. An dem ersten Klemmelement sind mit dem feststehenden Teil in Längsrichtung fest verbundene Kontaktflächen ausgebildet, und an dem zweiten Klemmelement sind mit dem beweglichen Teil in Längsrichtung fest verbundene Kontaktflächen ausgebildet. Das erste Klemmelement und das zweite Klemmelement berühren sich gegenseitig an deren Kontaktflächen in gespanntem Zustand des Spannelementes. Der Kraftfluss vom Spannelement zum feststehenden Teil verläuft durch das erste Klemmelement, das zweite Klemmelement und das bewegliche Teil. Über die von dem ersten Klemmelement und dem zweiten Klemmelement gebildeten zusätzlichen Reibkontaktflächen kann eine höhere maximale Reibkraft zwischen dem beweglichen Teil und dem feststehenden Teil übertragen werden.

Vorteilhaft besitzen die Klemmelemente jeweils eine senkrecht zur Längsebene gemessene Breite, wobei die Breite der Klemmelemente bei gelöstem Spannelement jeweils größer als die Breite der Klemmelemente bei verspanntem Spannelement ist. Durch das Auffedern der Klemmelemente quer zur Längsebene sind das bewegliche Teil und das feststehende Teil auch bei teilweise gelöstem Spannelement zueinander vorgespannt, so dass eine geringe Reibkraftübertragung zwischen beweglichem Teil und feststehendem Teil möglich ist. Wird das bewegliche Teil in Längsrichtung verschoben und die Sägekette dadurch nachgespannt, so hält das bewegliche Teil seine Position aufgrund der zwischen dem beweglichen Teil und dem feststehenden Teil vorhandenen Reibkräfte ohne Zutun des Bedieners. Ist die Soll-Position des beweglichen Teils erreicht, kann das bewegliche Teil, ohne vom Bediener in der Soll-Position gehalten werden zu müssen, zwischen dem feststehenden Teil und dem Spannelement festgespannt werden.

Es ist vorteilhaft vorgesehen, dass die Klemmelemente jeweils mindestens eine zur Längsebene parallel verlaufende Platte umfassen. Eine Platte des ersten Klemmelementes besitzt vorteilhaft zwei mit dem feststehenden Teil in Längsrichtung fest verbundene Kontaktflächen. Eine Platte des zweiten Klemmelementes besitzt vorteilhaft zwei mit dem beweglichen Teil in Längsrichtung fest verbundene Kontaktflächen. Vorteilhaft umfassen die Klemmelemente jeweils mindestens zwei zur Längsebene parallel verlaufende Platten. Dabei greifen die mindestens zwei Platten des ersten Klemmelementes mit den mindestens zwei Platten des zweiten Klemmelementes vorteilhaft lamellenartig ineinander. Dadurch stellt sich ein Lamelleneffekt zwischen dem ersten Klemmelement und dem zweiten Klemmelement ein. Durch das abwechselnde Ineinandergreifen der jeweils mindestens zwei Platten des ersten Klemmelementes und des zweiten Klemmelementes erhöht sich die Anzahl der reibkraftübertragenden Reibkontaktflächen bei gleichbleibender vom Spannelement ausgehender und senkrecht zur Längsebene wirkender Klemmkraft. Dadurch wird die maximal zu übertragende Reibkraft zwischen dem beweglichen Teil und dem feststehenden Teil erhöht. Dadurch, dass jedes Klemmelement mindestens zwei Platten umfasst, ist die Anzahl der Einzelteile gegenüber einer Gestaltung aus Einzelplatten verringert und die Montage vereinfacht.

Vorteilhaft ist die Breite der Platten der Klemmelemente jeweils kleiner als die Länge und kleiner als die Höhe der Platten. Die Platten sind vorteilhaft als dünne Platte ausgebildet, deren Breite nur einen Bruchteil der Länge und Höhe beträgt. Dadurch kann der Bauraum, der in Spannrichtung benötigt wird, gering gehalten werden. Vorteilhaft sind die Platten elastisch. Bevorzugt sind das erste Klemmelement und/oder das zweite Klemmelement gefalzt. Insbesondere bei einem Klemmelement, das mindestens zwei Platten aufweist, führt der Falz zu einem Auffedern der Platten. Durch die dünne, elastische und/oder gefalzte Ausbildung der Platten wird ein Auffedern der Platten ermöglicht. Bevorzugt sind das erste Klemmelement und/oder das zweite Klemmelement aus Edelstahl.

Mit zunehmender Anzahl der lamellenartig ineinander greifenden Platten reduziert sich die Kraft, die an der Anschlagsfläche, der Spannfläche sowie an den Kontaktflächen zwischen dem beweglichen Teil und dem feststehenden Teil wirkt. Dadurch wird nicht nur die maximal zu übertragende Kraft zwischen beweglichem Teil und feststehendem Teil erhöht, sondern auch der Verschleiß an den Kontaktflächen sowie an der Anschlagsfläche und der Spannfläche erheblich reduziert. Die Platten können dabei an zwei oder mehr Klemmelementen ausgebildet sein.

Es ist vorteilhaft vorgesehen, dass ein Bolzen durch das erste Klemmelement ragt, und dass das erste Klemmelement über den Bolzen in Längsrichtung fixiert an dem feststehenden Teil gehalten ist. Vorteilhaft ist das erste Klemmelement mittels einer Feder in Längsrichtung spielfrei an dem feststehenden Teil gehalten. Durch das spielfreie Halten des ersten Klemmelementes mittels der Feder kann die Sägekette präzise gespannt werden. Eine aus dem Spiel zwischen Bolzen und dem Klemmelement resultierende Relativbewegung zwischen feststehendem Teil und beweglichem Teil kann dadurch während des Spannvorganges der Sägekette und vor dem endgültigen Verspannen der Teile zueinander vermieden werden.

Vorteilhaft ist im feststehenden Teil ein Magnet zum Halten des beweglichen Teils am feststehenden Teil bei gelöstem Spannelement angeordnet. Dadurch ist das bewegliche Teil an dem feststehenden Teil, insbesondere die Führungsschiene, auch dann fixiert, wenn das Spannelement vollständig gelöst ist. Die Motorkettensäge kann montiert und/oder die Sägekette nachgespannt werden, ohne dass die Führungsschiene vom Bediener gehalten werden muss. Dadurch ist ein leichtes Montieren der Motorsäge sowie ein einfaches und schnelles Nachspannen der Sägekette gewährleistet.

Ausführungsbeispiele der Erfindung werden im Folgenden anhand der Zeichnung erläutert. Es zeigen:
- Fig. 1: eine Explosionsdarstellung einer Motorkettensäge mit einer Spannvorrichtung mit Klemmelementen mit zwei Platten,
- Fig. 2: eine schematische Schnittdarstellung von Klemmelementen mit einer Platte in gespanntem Zustand,
- Fig. 3: die Anordnung aus Fig. 2 in ungespanntem Zustand,
- Fig. 4: eine schematische Schnittdarstellung von Klemmelementen mit zwei Platten in gespanntem Zustand,
- Fig. 5: eine schematische Schnittdarstellung von Klemmelementen mit drei Platten in gespanntem Zustand,
- Fig. 6: eine ausschnittsweise Schnittdarstellung der Motorkettensäge aus Fig. 1,
- Fig. 7: eine Explosionsdarstellung einer Motorkettensäge mit Klemmelementen mit drei Platten und einer werkzeuglosen Spannvorrichtung,
- Fig. 8: eine ausschnittsweise Schnittdarstellung der Motorkettensäge aus Fig. 7,
- Fig. 9: eine perspektivische Darstellung ineinander greifender Klemmelemente mit zwei Platten,
- Fig. 10: eine perspektivische Explosionsdarstellung der Klemmelemente aus Fig. 9,
- Fig. 11: eine perspektivische Darstellung ineinander greifender Klemmelemente mit drei Platten,
- Fig. 12: eine perspektivische Explosionsdarstellung der Klemmelemente aus Fig. 11,
- Fig. 13: eine perspektivische Darstellung einer Magnethaltevorrichtung,
- Fig. 14: eine perspektivische Explosionsdarstellung der Magnethaltevorrichtung aus Fig. 13.

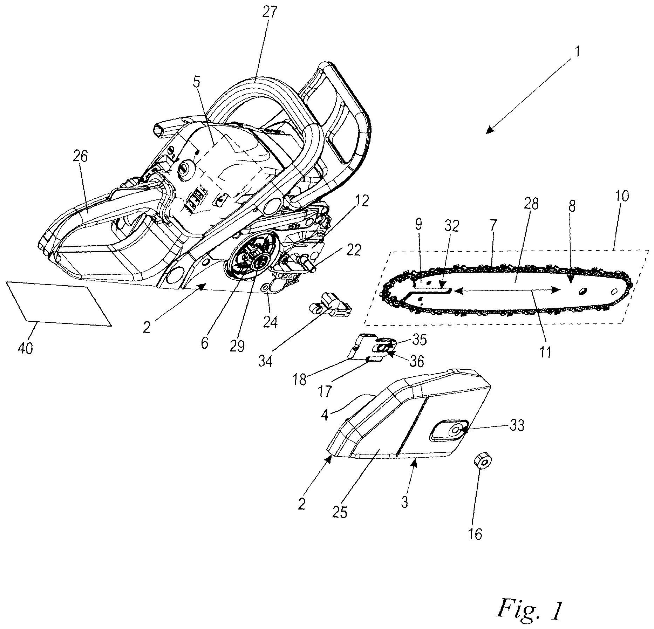

Die in Fig. 1 gezeigte Motorkettensäge 1 besitzt ein Gehäuse 24, an dem ein hinterer Handgriff 26 sowie ein Griffrohr 27 zum Führen der Motorkettensäge 1 festgelegt sind. An der dem hinteren Handgriff 26 gegenüberliegenden Seite des Gehäuses 24 ragt eine Führungsschiene 28 nach vorn. An der Führungsschiene 28 ist eine Sägekette 7 umlaufend angeordnet, die von einem schematisch dargestellten Antriebsmotor 5 angetrieben ist. Der Antriebsmotor 5 ist insbesondere ein Verbrennungsmotor, vorteilhaft ein Zweitaktmotor oder ein gemischgeschmierter Viertaktmotor. Der Antriebsmotor 5 kann jedoch auch ein Elektromotor sein, der über einen Akku oder über ein Anschlusskabel mit Energie versorgt sein kann.

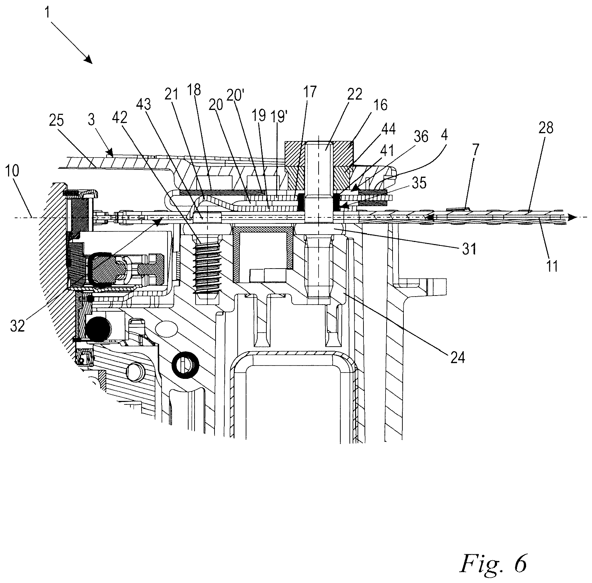

Der Antriebsmotor 5 treibt eine Antriebswelle 29 an, die aus dem Gehäuse 24 ragt. Auf der Antriebswelle 29 ist ein Antriebsmittel 6 angeordnet, welches im Ausführungsbeispiel als Ritzel ausgebildet ist. Das Antriebsmittel 6 dient zum Antrieb der Sägekette 7, die im Betrieb über das Antriebsmittel 6 geführt ist. An dem Gehäuse 24 ist eine Anschlagsfläche 12 ausgebildet, an der die Führungsschiene 28 in montiertem Zustand der Motorkettensäge 1 anliegt. Die Anschlagsfläche 12 kann dabei an dem Gehäuse 24 selbst oder an einem am Gehäuse 24 angeordneten Seitenblech ausgebildet sein. In das Gehäuse 24 ist ein Bolzen 22 eingeschraubt. Der Bolzen 22 besitzt im Ausführungsbeispiel zwei Gewindeabschnitte, die durch einen umlaufenden Bund (siehe Fig. 6) voneinander getrennt sind. Der dem Gehäuse 24 zugewandte Abschnitt ist in das Gehäuse 24 eingeschraubt. Auf dem nach außen ragenden Abschnitt ist die Führungsschiene 28 fixiert. Zur Fixierung auf dem Bolzen 22 besitzt die Führungsschiene 28 eine Aufnahmeöffnung 32, die im Ausführungsbeispiel als Langloch ausgebildet ist. Zur Fixierung der Führungsschiene 28 ist ein Gehäusedeckel 25 vorgesehen, der eine Öffnung 33 für den Bolzen 22 besitzt. Der Gehäusedeckel 25 ist über eine Mutter 16 auf dem Bolzen 22 zu befestigen. Der Gehäusedeckel 25 ist Teil eines Spannelements 3, das stirnseitig eine Spannfläche 4 besitzt, welche zur Führungsschiene 28 gerichtet ist. Im Ausführungsbeispiel ist das Spannelement 3 durch den Gehäusedeckel 25 und die Mutter 16 gebildet. Die Führungsschiene 28 ist in geklemmten Zustand zwischen der Anlagefläche 12 des Gehäuses 24 und der Spannfläche 4 des Spannelementes 3 geklemmt gehalten. Es kann auch vorgesehen sein, dass die Mutter 16 das Spannelement 3 bildet und dass eine Stirnseite der Mutter die Spannfläche 4 bildet. Dies ist insbesondere dann vorgesehen, wenn der Gehäusedeckel 25 in Längsrichtung 10 fest mit der Führungsschiene 28 verbunden ist.

Wie in Fig. 1 gezeigt, umfasst die Motorkettensäge 1 einen feststehenden Teil 2 und einen beweglichen Teil 8. Im Ausführungsbeispiel umfasst der feststehende Teil 2 der Motorkettensäge 1 das Gehäuse 24. Der hintere Handgriff 26 und das Griffrohr 27 der Motorsäge 1 sind vorteilhaft Teil eines Griffgehäuses, das mit dem feststehenden Teil 2 schwingungsdämpfend über Antivibrationselemente verbunden ist. Der bewegliche Teil 8 umfasst im Ausführungsbeispiel die Führungsschiene 28. Die Führungsschiene 28 besitzt eine Längsrichtung 11, die der Längsachse der Führungsschiene 28 entspricht. Die Längsrichtung 11 verläuft in einem auf einem ebenen, horizontalen Boden 40 abgestellten Zustand der Motorkettensäge 1 in einer horizontalen Ebene mittig durch die Führungsschiene 28. Die Führungsschiene 28 besitzt eine Längsebene 10, welche in einem auf einen ebenen, horizontalen Boden 40 abgestellten Zustand der Motorkettensäge 1 die Längsrichtung 11 enthält und senkrecht zum Boden steht. Der bewegliche Teil 8 kann in Längsrichtung 11 gegenüber dem feststehenden Teil 2 verschoben werden. Ist die Führungsschiene 28 verspannt, so ist die Führungsschiene 28 an ihrem Ende 9 zwischen zwei Bauteilen des feststehenden Teils 2, im Ausführungsbeispiel zwischen dem Gehäuse 24 und dem Gehäusedeckel 25, gehalten. Im Ausführungsbeispiel ist die Führungsschiene quer zur Längsebene 10, insbesondere senkrecht zur Längsebene 10, gespannt. Das Gehäuse 24, der Gehäusedeckel 25 sowie das Spannelement 3 sind in Längsrichtung 11 der Führungsschiene 28 miteinander fest verbunden. Der Gehäusedeckel 25 und das Spannelement 3 sind in Längsrichtung 11 der Führungsschiene 28 mit dem feststehenden Teil 2 fest verbunden. Die Führungsschiene 28 ist mit dem beweglichen Teil 8 in ihrer Längsrichtung 11 fest verbunden. In vorteilhafter, alternativer Ausführung kann der bewegliche Teil den Gehäusedeckel 25 umfassen. In diesem Fall bildet die Stirnseite der Mutter 16 die Spannfläche 4.

Wie in Fig. 1 gezeigt, sind zwischen der Anschlagsfläche 12 und der Spannfläche 4 ein erstes Klemmelement 17 und ein zweites Klemmelement 18 angeordnet. Das erste Klemmelement 17 besitzt eine Öffnung 35, durch welche der Bolzen 22 in montiertem Zustand der Führungsschiene 28 hindurchragt. Das Klemmelement 17 ist über den Bolzen 22 mit dem Gehäuse 24 in Längsrichtung 11 fest verbunden. Das zweite Klemmelement 18 ist mit der Führungsschiene 28 verschraubt und dadurch mit der Führungsschiene in Längsrichtung 11 fest verbunden. Das zweite Klemmelement 18 besitzt eine Öffnung 36, die im Ausführungsbeispiel als Langloch ausgebildet ist. Der Bolzen 22 ragt durch die Öffnung 36 des zweiten Klemmelements 18. Da die Öffnung 36 als Langloch ausgebildet ist, ist das zweite Klemmelement 18 gegenüber dem Gehäuse 24 in Längsrichtung 11 verschiebbar.

Wie Fig. 1 zeigt, umfasst die Motorkettensäge 1 eine Magnetvorrichtung 34, die an dem Gehäuse 24 befestigt ist. Mittels der Magnetvorrichtung 34 wird die Führungsschiene 28 an dem Gehäuse 24 beim Montage- und Spannvorgang magnetisch gehalten. Dadurch muss die Führungsschiene 28 beim Montagevorgang nicht zusätzlich vom Bediener an das Gehäuse 24 gehalten werden. Durch die Magnetvorrichtung 34 wird die Montage der Führungsschiene 28 an dem Gehäuse 24 und/oder das Nachspannen der Sägekette 7 durch Verschieben der Führungsschiene 28 in Längsrichtung 11 relativ zum Gehäuse 24 vereinfacht.

Die nachfolgenden Bezugszeichen, definierten Begriffe und genannten Vorteile gelten in entsprechender Weise für alle Ausführungsbeispiele.

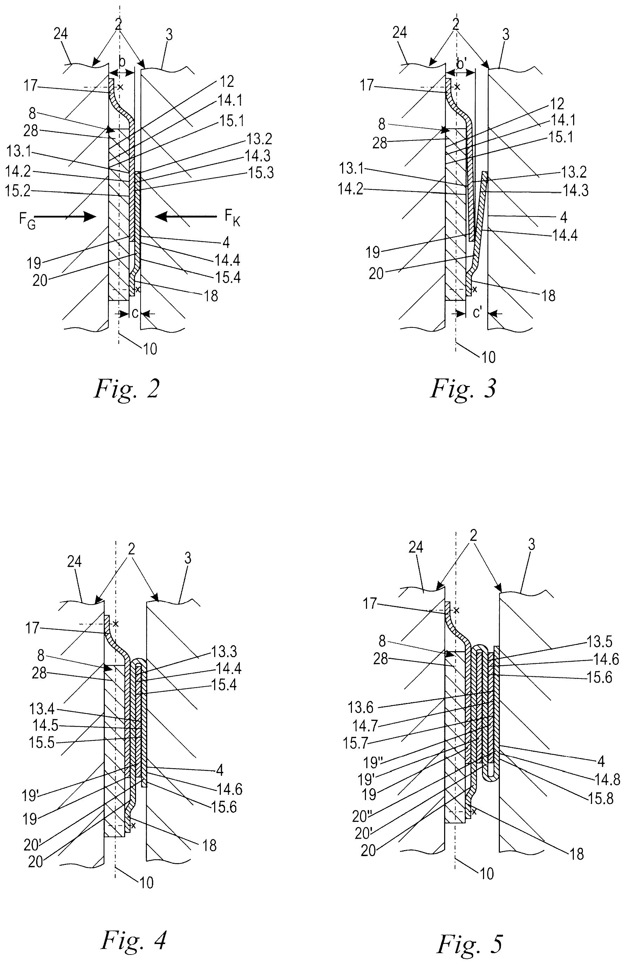

In Fig. 2 ist eine schematische ausschnittsweise Schnittdarstellung der Motorkettensäge 1 in gespanntem Zustand gezeigt, bei welcher der feststehende Teil 2, der bewegliche Teil 8 sowie das erste Klemmelement 17 und das zweite Klemmelement 18 dargestellt sind. Im Ausführungsbeispiel umfasst der feststehende Teil 2 das Gehäuse 24, und der bewegliche Teil 8 umfasst die Führungsschiene 28. Das erste Klemmelement 17 besitzt eine dünne Platte 19 und ist an dem Gehäuse 24 so befestigt, dass dieses mit dem Gehäuse 24 in Längsrichtung 11 fest verbunden ist. Das zweite Klemmelement 18 besitzt eine dünne Platte 20 und ist an der Führungsschiene 28 so befestigt, dass dieses in Längsrichtung 11 mit der Führungsschiene 28 fest verbunden ist.

Wie Fig. 2 zeigt, besitzt die Motorkettensäge 1 eine mit dem feststehenden Teil 2 in Längsrichtung 11 fest verbundene Anschlagsfläche 12 und eine mit dem feststehenden Teil 2 in Längsrichtung 11 fest verbundene Spannfläche 4 sowie mit dem feststehenden Teil 2 in Längsrichtung 11 fest verbundene Kontaktflächen 13.1 und 13.2. Im Ausführungsbeispiel ist die Anschlagsfläche 12 an dem Gehäuse 24 und die Spannfläche 4 an dem Spannelement 3 ausgebildet. Die Platte 19 des Klemmelementes 17 besitzt zwei Längsseiten, die parallel zur Längsebene 10 verlaufen, und an welchen jeweils eine Kontaktfläche 13.1, 13.2 ausgebildet ist. Im Ausführungsbeispiel besitzt die Motorkettensäge 1 die vier mit dem beweglichen Teil 8 in Längsrichtung 11 fest verbundenen Kontaktflächen 14.1, 14.2, 14.3, 14.4. An den Längsseiten der Führungsschiene 28, die parallel zur Längsebene 10 verlaufen, ist jeweils eine Kontaktfläche 14.1 bzw. 14.2 ausgebildet. Die Platte 20 des Klemmelementes 18 besitzt ebenfalls zwei Längsseiten, die parallel zur Längsebene 10 verlaufen und an welchen jeweils eine Kontaktfläche 14.3 bzw. 14.4 ausgebildet ist.

In gespanntem Zustand der Führungsschiene 28 stehen die mit dem feststehenden Teil 2 in Längsrichtung 11 fest verbundenen Kontaktflächen 13.1 und 13.2 sowie die Anschlagsfläche 12 und die Spannfläche 4 mit den mit dem beweglichen Teil 8 in Längsrichtung 11 fest verbundenen Kontaktflächen 14.1, 14.2, 14.3, 14.4 in Kontakt und berühren sich dabei paarweise in einer Reibkontaktfläche 15.1, 15.2, 15.3, 15.4. So bilden die sich gegenseitig berührende Anschlagsfläche 12 und die Kontaktfläche 14.1 der Führungsschiene 28 die Reibkontaktfläche 15.1, die Kontaktfläche 13.1 des Klemmelementes 17 und die Kontaktfläche 14.2 der Führungsschiene 28 bilden die Reibkontaktfläche 15.2, die Kontaktfläche 13.2 des Klemmelementes 17 und die Kontaktfläche 14.3 des Klemmelementes 18 bilden die Reibkontaktfläche 15.3, und die Spannfläche 4 und die Kontaktfläche 14.4 des Klemmelementes 18 bilden die Reibkontaktfläche 15.4.

Wie in Fig. 2 gezeigt, wird beim Verspannen der Führungsschiene 28 ausgehend von einem Anzugsmoment der in Fig. 2 nicht gezeigten Mutter 16 (Fig. 1) am Spannelement 3 eine Klemmkraft F_{K} aufgebracht, die senkrecht zur Längsebene 10 wirkt. Dabei wird das Spannelement 4 mit der Klemmkraft F_{K} gegen das zweite Klemmelement 18, das erste Klemmelement 17, die Führungsschiene 28 und gegen das Gehäuse 24 gespannt, wobei das Gehäuse 24 über den Bolzen 22 mit einer Kraft F_{G} der Klemmkraft F_{K} entgegenwirkt. Dabei liegen die zum feststehenden Teil 2 in Längsrichtung 11 fest verbundenen Kontaktflächen 13.1, 13.2, die Anlagefläche 12 und die Spannfläche 4 mit den mit dem beweglichen Teil 8 in Längsrichtung 11 fest verbundenen Kontaktflächen 14.1, 14.2, 14.3, 14.4 abwechselnd hintereinander in einem Kraftfluss. In jeder der Reibkontaktflächen 15.1, 15.2, 15.3, 15.4 wirkt dabei eine Kontaktkraft jeweils senkrecht zur Reibkontaktfläche 15.1, 15.2, 15.3, 15.4, deren Höhe im Wesentlichen der an der Spannfläche 4 wirkenden Klemmkraft F_{K} entspricht. Dadurch wirkt in jeder Reibkontaktfläche 15.1, 15.2, 15.3, 15.4 eine Reibkraft, die einer Verschiebung des beweglichen Teils 8 gegenüber dem feststehenden Teil 2 entgegenwirkt.

Über die an den Reibkontaktflächen 15.1, 15.2, 15.3, 15.4 wirkenden Reibkräfte können zwischen dem feststehenden Teil 2 und dem beweglichen Teil 8 Kräfte übertragen werden. Die Reibkraft entspricht dem Produkt aus der in der Reibkontaktfläche 15.1, 15.2, 15.3, 15.4 wirkenden Kontaktkraft und dem in der Reibkontaktfläche 15.1, 15.2, 15.3, 15.4 herrschenden Reibkoeffizienten. Mit jeder zusätzlichen Reibkontaktfläche 15.1, 15.2, 15.3, 15.4 erhöht sich auch die zwischen dem feststehenden Teil 2 und dem beweglichen Teil 8 übertragbare maximale Kraft, ohne dass sich das bewegliche Teil 8 relativ zu dem feststehenden Teil 2 verschiebt.

Wie in den Figuren 2 und 3 gezeigt, besitzt in verspanntem Zustand der Führungsschiene 28 das erste Klemmelement 17 eine senkrecht zur Längsebene 10 gemessene Breite b und das zweite Klemmelement eine senkrecht zur Längsebene 10 gemessene Breite c. Ist das Spannelement 3 gelöst, federn die Klemmelemente 17, 18 in Richtung senkrecht zur Längsebene 10 auf. Dadurch ist die Breite b' des Klemmelementes 17 bei gelöstem Spannelement 3 größer als die Breite b des Klemmelementes 17 bei gespanntem Spannelement 3. Auch die Breite c' des Klemmelementes 18 bei gelöstem Spannelement 3 ist größer als die Breite c des Klemmelementes 18 bei gespanntem Spannelement 3. Im Ausführungsbeispiel verlaufen bei gespanntem Spannelement 3 alle Kontaktflächen 13.1, 13.2, 14.1, 14.2, 14.3, 14.4 sowie die Anlagefläche 12 und die Spannfläche 4 parallel zur Längsebene 10 des beweglichen Teils 8. Ist das Spannelement 3 teilweise oder vollständig gelöst, federn die Klemmelemente 17, 18 auf und die Kontaktflächen 13.1, 13.2, 14.3, 14.4 der Platten 19, 20 verlaufen schräg zur Längsebene 10.

Fig. 3 zeigt die Anordnung mit teilweise gelöster Mutter 16 (Fig. 1). Dadurch ist das Spannelement 3 nicht fest gegen das erste Klemmelement 18 gespannt. Im Ausführungsbeispiel berühren sich die Führungsschiene 28, die Klemmelemente 17, 18 und das Spannelement 3 nur noch gegenseitig im Punktkontakt. In einem vorteilhaften Ausführungsbeispiel reduziert sich jeweils die Größe der Reibkontaktflächen 15.1, 15.2, 15.3, 15.4 und die Kontaktkraft in den Reibkontaktflächen 15.1, 15.2, 15.3, 15.4. Einzig die Reibkontaktfläche 15.1 zwischen der Anlagefläche 12 und der Führungsschiene 28 besteht, da die in Fig. 3 nicht gezeigte Magnetvorrichtung 34 die Führungsschiene 28 auch bei gelöstem Spannelement 3 an der Anlagefläche 12 magnetisch hält.

Die Kontaktflächen 13.1, 13.2 und 14.3, 14.4 sind nach dem Prinzip einer Lamellenkupplung angeordnet. Die mit dem feststehenden Teil 2 in Längsrichtung 11 fest verbundenen Kontaktflächen 13.1, 13.2 kontaktieren sich gegenseitig im Wechsel mit den mit dem beweglichen Teil 8 in Längsrichtung 11 fest verbundenen Kontaktflächen 14.3, 14.4 und liegen im Kraftfluss zwischen Spannfläche 4 und Anlagefläche 12 hintereinander. In vorteilhaften Ausführungsbeispielen kann die Anordnung der Platten 19, 20 der Klemmelemente 17, 18 sich von dem Ausführungsbeispiel nach Fig. 2 und 3. unterscheiden. Vorteilhaft bleibt das Prinzip einer Lamellenkupplung dabei gewahrt.

In Fig. 4 ist eine schematische Schnittdarstellung eines Ausführungsbeispiels der Motorkettensäge 1 gezeigt, welche ein erstes Klemmelement 17 und ein zweites Klemmelement 18 besitzt. Der Unterschied zum Ausführungsbeispiel der Fig. 2 besteht darin, dass das Klemmelement 17 zwei Platten 19, 19' und das Klemmelement 18 zwei Platten 20, 20' besitzt. Die zwei Platten 19, 19' des Klemmelementes 17 und die zwei Platten 20, 20' des Klemmelementes 18 greifen lamellenartig ineinander. Dabei stehen die Anschlagsfläche 12, die Spannfläche 4 und die mit dem feststehenden Teil 2 in Längsrichtung 11 fest verbundenen Kontaktflächen 13.1, 13.2, 13.3, 13.4 der Platten 19, 19' mit den mit dem beweglichen Teil 8 in Längsrichtung 11 fest verbundenen Kontaktflächen 14.1, 14.2, 14.3, 14.4, 14.5, 14.6 abwechselnd in Kontakt und bilden die Reibkontaktflächen 15.1, 15.2, 15.3, 15.4, 15.5, 15.6.

Die Anzahl der Reibkontaktflächen 15.1, 15.2, 15.3, 15.4, 15.5, 15.6 des in der Fig. 4 gezeigten Ausführungsbeispiels sind gegenüber dem Ausführungsbeispiel der Fig. 2 von vier Reibkontaktflächen 15.1, 15.2, 15.3, 15.4 auf sechs Reibkontaktflächen 15.1, 15.2, 15.3, 15.4, 15.5, 15.6 erhöht. Mit der Erhöhung der Anzahl von vier Reibkontaktflächen auf sechs Reibkontaktflächen erhöht sich die zwischen dem feststehenden Teil 2 und dem beweglichen Teil 8 wirkende maximale Reibkraft um in etwa bis zu 50%. Dadurch erhöht sich auch die übertragbare maximale Kraft zwischen dem feststehenden Teil 2 und dem beweglichen Teil 8 um in etwa bis zu 50%.

In Fig. 5 ist eine schematische Schnittdarstellung eines Ausführungsbeispiels der Motorkettensäge 1 gezeigt, bei welcher die das Klemmelement 17 drei Platten 19, 19',19" und das Klemmelement 18 drei Platten 20, 20', 20" besitzt. Gegenüber dem Ausführungsbeispiel der Fig. 4 besitzt die Motorsäge 1 zwei zusätzliche mit dem feststehenden Teil 2 in Längsrichtung 11 fest verbundene Kontaktflächen 13.5, 13.6, zwei zusätzliche mit dem beweglichen Teil 8 in Längsrichtung 11 fest verbundene Kontaktflächen 14.7, 14.8 sowie zwei zusätzliche Reibkontaktflächen 15.7, 15.8. Mit der Erhöhung der Anzahl von vier Reibkontaktflächen 15.1, 15.2, 15.3, 15.4 aus Fig. 2 auf acht Reibkontaktflächen 15.1, 15.2, 15.3, 15.4, 15.5, 15.6, 15.7, 15.8 erhöht sich die zwischen dem feststehenden Teil 2 und dem beweglichen Teil 8 wirkende maximale Reibkraft gegenüber dem Ausführungsbeispiel aus Fig. 2 um in etwa bis zu 100%. Dadurch erhöht sich auch die übertragbare maximale Kraft zwischen dem feststehenden Teil 2 und dem beweglichen Teil 8 um in etwa bis zu 100%. In weiteren vorteilhaften Ausführungsbeispielen können die Klemmelemente 17, 18 jeweils auch vier oder mehr Platten 19 und 20 umfassen.

Die Fig. 6 zeigt die Motorkettensäge 1 in gespanntem Zustand, in dem die Führungsschiene 28 mit der Sägekette 7 zwischen der Anschlagsfläche 12 des Gehäuses 24 und der Spannfläche 4 des Spannelementes 3 gespannt sind. An der Führungsschiene 28 ist das zweite Klemmelement 18 befestigt, das im Ausführungsbeispiel zwei Platten 20, 20' aufweist. An den Platten 20, 20' sind jeweils zwei Kontaktflächen 14.3, 14.4, 14.5, 14.6 entsprechend zur Gestaltung aus Fig. 4 ausgebildet. Im Ausführungsbeispiel nach Fig. 6 ist das zweite Klemmelement 18 mit der Führungsschiene 28 verschraubt. Eine Hülse 41 ist in der Öffnung 35 des Klemmelementes 17 angeordnet, wobei im Ausführungsbeispiel die Hülse 41 in der Öffnung 35 des Klemmelementes 17 eingepasst ist. Der Bolzen 22 ragt durch die Hülse 41 und das Klemmelement 17, so dass das Klemmelement 17 mit dem Gehäuse 24 in Längsrichtung 11 fest verbunden ist. In das Gehäuse 24 ist eine Schraube 42 mit einem Schraubenkopf 43 eingeschraubt, wobei der Schraubenkopf 43 der Schraube 42 in die Aufnahmeöffnung 32 der Führungsschiene 28 ragt. An der Platte 20 des ersten Klemmelementes 17 ist eine Feder 21 ausgebildet, die die Form einer quer zur Längsebene 10 von der Längsebene 10 weggerichteten Wölbung der Platte 20 aufweist. Bereits in einem nur teilweise verspannten Zustand der Führungsschiene 28 liegt die Feder 21 an dem Schraubenkopf 43 der Schraube 42 an und verspannt in Längsrichtung 11 das Klemmelement 17 über die Hülse 41 gegen den Bolzen 22. Dadurch wird das radiale Spiel zwischen der Hülse 41 und dem Bolzen 22 überwunden, und der Bolzen liegt definiert an der der Feder zugewandten Seite der Hülse 41 an der Hülse 41 an. Dadurch ist ein unerwünschtes Verschieben des Klemmelementes 17 in Längsrichtung 11 gegenüber dem Bolzen 22 und dem Gehäuse 24 während des Spannvorganges vermieden. In vorteilhafter Ausführung kann die Feder 21 auch als separate Feder ausgebildet sein.

Wie in Fig. 6 gezeigt, ist im Ausführungsbeispiel in den Gehäusedeckel 25 eine Hülse 44 eingespritzt. Die Spannfläche 4 ist an dem Gehäusedeckel 25 ausgebildet. Der Bolzen 22 ragt durch die Hülse 44, wobei die Mutter 16 auf dem Bolzen 22 gegen die Hülse 44 verspannt wird. Dabei wird die Führungsschiene 28 zwischen das Spannelement 3 und das Gehäuse 24 geklemmt. Der Bolzen 22 ragt durch eine Öffnung 36 des Klemmelementes 18, wobei die Öffnung 36 als Langloch ausgebildet ist. Dadurch sind das Klemmelement 18 und die Führungsschiene 28 in Längsrichtung 11 gegenüber dem Bolzen 22 und dem Gehäuse 24 bei gelöster Mutter 16 und damit gelöstem Spannelement 3 verschiebbar. Die jeweils zwei Platten 19, 19', 20, 20' der Klemmelemente 17, 18 greifen lamellenartig ineinander und bilden vier zusätzliche Reibkontaktflächen 15.1, 15.2, 15.3, 15.4 (siehe Fig. 4). Dadurch werden gegenüber einer Motorkettensäge 1 ohne Klemmelemente die maximal wirkenden Reibkräfte zwischen dem feststehenden Teil 2 und dem beweglichen Teil 8 um bis zu 100% erhöht.

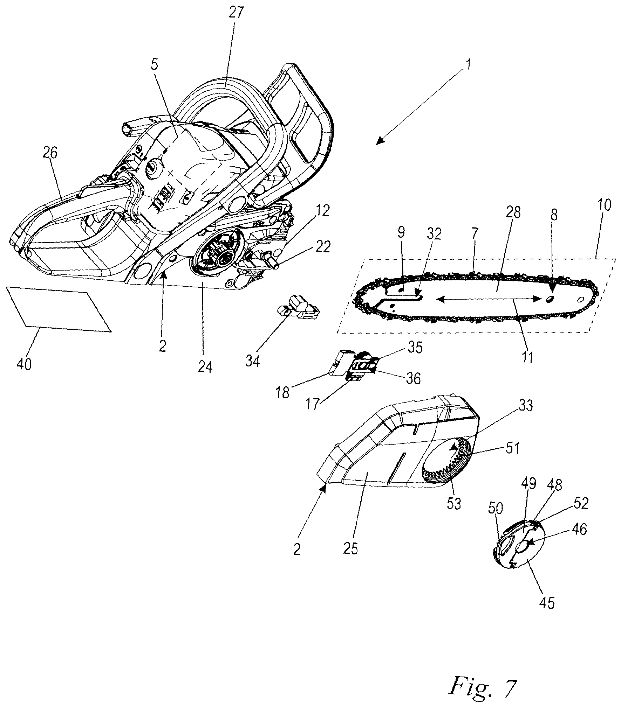

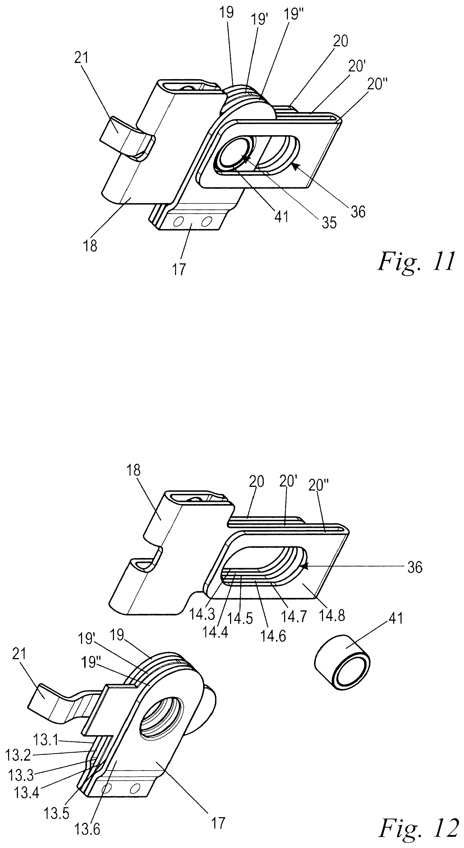

In Fig. 7 ist ein weiteres Ausführungsbeispiel der Motorkettensäge 1 gezeigt, welches sich von dem in Fig. 1 gezeigten Ausführungsbeispiel in der Gestaltung der Klemmelemente 17, 18 sowie in der Ausführung des Bedienelements 46, das anstatt der Mutter 16 vorgesehen ist, unterscheidet. Das erste Klemmelement 17 sowie das zweite Klemmelement 18 umfassen jeweils drei Platten 19, 19', 19', 20, 20', 20" (siehe Figuren 11 und 12).

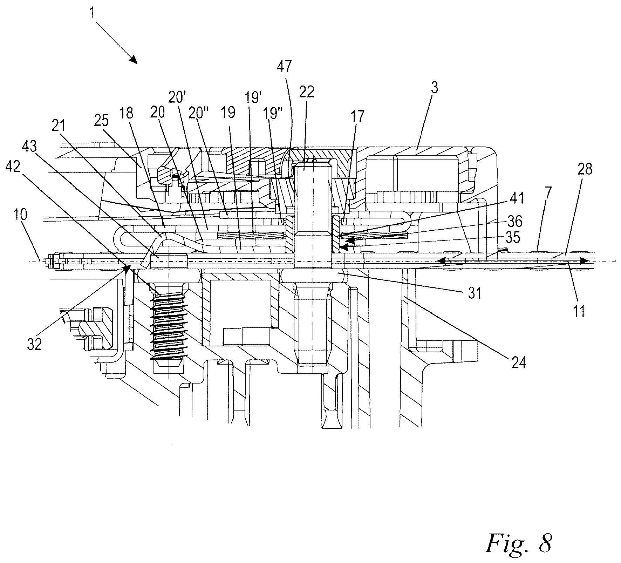

Im Ausführungsbeispiel besitzt das Bedienelement 46 eine Drehscheibe 45 mit einem Schwenkgriff 49. Die Drehscheibe 45 hat im Wesentlichen die Form einer runden Scheibe. Die Drehscheibe 45 besitzt an ihrem Außenrand einen in Umfangsrichtung verlaufenden Haltesteg 52. Die Drehscheibe 45 ist über ihren Haltesteg 52 in einer an der Öffnung 33 des Gehäusedeckels 25 ausgebildeten Haltenut 53 verliersicher gehalten. Um den Gehäusedeckel 25 gegen die Führungsschiene 28 und das Gehäuse 24 zu verspannen, wird die Drehscheibe 45 mit einem Gewinde 47 (Fig. 8) auf den Bolzen 22 geschraubt. Die Drehscheibe 45 umfasst einen Schwenkgriff 49, welcher an einem Gelenk 48 an der Drehscheibe 45 schwenkbar ist. Um die Drehscheibe 45 zu drehen, kann der Schwenkgriff 49 nach außen geschwenkt werden. Das Drehen der Drehscheibe 45 auf den Bolzen 22 mittels des Schwenkgriffs 49 ermöglicht ein Verspannen der Führungsschiene 28 ohne die Benutzung von Werkzeug.

Die beim Verspannen der Drehscheibe 45 entstehenden Klemmkräfte F_{K} werden von der Führungsschiene 52 der Drehscheibe 45 auf die Führungsnut 53 des Gehäusedeckels übertragen. Im Ausführungsbeispiel wird der Gehäusedeckel 24 gegen die Führungsschiene 28 und das Gehäuse 24 geklemmt. Um ein ungewolltes Lösen der Drehscheibe 45 vom Bolzen 22 zu vermeiden, sind an der Drehscheibe 45 Zahnelemente 50 ausgebildet, die beim Rückschwenken des Schwenkgriffes 49 in eine an der Öffnung 33 des Gehäusedeckels 24 ausgebildete Verzahnung 53 geschoben werden. Die Zahnelemente 50 greifen formschlüssig in die Verzahnung 51 ein, so dass ein ungewolltes Lösen der Drehscheibe 45 verhindert wird.

Fig. 8 zeigt das Gewinde 47 der Drehscheibe 45, das im Ausführungsbeispiel an einer in die Drehscheibe 45 eingespritzten Mutter ausgebildet ist. Die Spannfläche 4 ist in der Schnittebene in Fig. 8 nicht gezeigt. Wie die in Fig. 8 gezeigte, ausschnittsweise Schnittdarstellung des in der Fig. 7 gezeigten Ausführungsbeispiels zeigt, sind beim Ausführungsbeispiel nach Fig. 7 Klemmelemente 17, 18 mit jeweils drei Platten 19, 19', 19" bzw. 20, 20', 20" vorgesehen. Durch den Einsatz von drei Platten 19, 19', 19", 20, 20', 20" je Klemmelement 17, 18 besitzt die Motorsäge 1 bei gespanntem Spannmittel 3 acht Reibkontaktflächen. Dadurch kann gegenüber einer Motorsäge ohne Klemmelemente 17, 18 die maximal wirkende Reibkraft zwischen dem feststehenden Teil 2 und dem beweglichen Teil 8 um bis zu 150% erhöht werden.

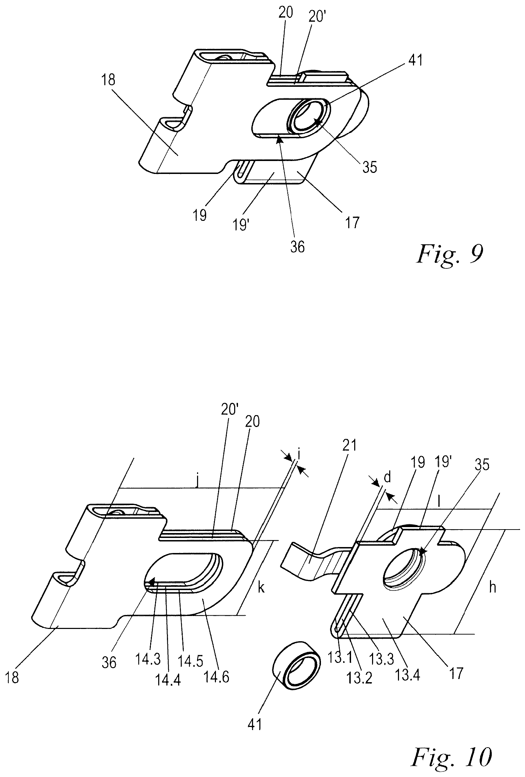

Die Figuren 9 und 10 zeigen Klemmelemente 17 und 18, wie sie in den Ausführungsbeispielen nach Fig. 1 oder nach Fig. 4 vorgesehen sind. In Fig. 9 sind die Klemmelemente 17, 18 in einem zueinander montiertem Zustand und in Fig. 10 in demontiertem Zustand dargestellt. Wie in den Figuren 9 und 10 gezeigt, besitzt das erste Klemmelement 17 zwei Platten 19, 19' und das zweite Klemmelement 18 zwei Platten 20, 20'.

Das erste Klemmelement 17 ist einteilig ausgebildet. Das erste Klemmelement 17 ist aus einem gefalzten Blechelement gebildet und besitzt zwei Platten 19, 19', die in gespanntem Zustand parallel zueinander verlaufen. Die Platten 19, 19' besitzen jeweils zwei Kontaktflächen 13.1, 13.2, 13.3, 13.4. Wie Fig. 10 zeigt, besitzen die der Spannfläche 4 näher liegenden Platten 19' eine Höhe h, eine Länge l und eine Breite d, wobei die Breite d geringer ist als die Höhe h und die Länge l. Die Länge l ist dabei parallel zur Längsrichtung 11 (Fig. 1) gemessen, die Breite d ist senkrecht zur Längsebene 10 (Fig. 1) gemessen, und die Höhe h ist senkrecht zur Längsrichtung 11 und parallel zur Längsebene 10 gemessen. Die Platten 19, 19' besitzen in etwa die gleiche Größe. Durch das erste Klemmelement 17 verläuft die Öffnung 35, in welche die Hülse 41 eingepasst ist. Die Feder 21, die an der Platte 19 ausgebildet ist, ist als Blechstreifen ausgebildet, verläuft in Längsrichtung 11 und besitzt eine quer zur Längsrichtung 11 ausgebildete Wölbung. Beim Verspannen der Motorkettensäge 1 kontaktiert die Feder 21 den Schraubenkopf 43 der im Gehäuse 24 befestigten Schraube 42 und verspannt das Klemmelement 17 mit der Hülse 41 in Längsrichtung 11 gegen den Bolzen 22. Dadurch ist das Klemmelement 17 mit der Hülse 41 am Bolzen 22 spielfrei in Längsrichtung 11 befestigt.

Wie in den Figuren 9 und 10 gezeigt, ist das zweite Klemmelement 18 ebenfalls einteilig ausgebildet. Das zweite Klemmelement 18 ist aus einem gefalzten Blechelement gebildet und besitzt zwei Platten 20, 20', die in gespanntem Zustand parallel zueinander verlaufen. Die Platten 20, 20' besitzen jeweils zwei Kontaktflächen 14.2, 14.3, 14.4, 14.5. Beide Platten 20, 20' besitzen eine Höhe k, eine Länge j und eine Breite i, wobei die Breite i geringer ist als die Höhe k und die Länge j. Die Breite i der Platten 20, 20' des zweiten Klemmelementes 18 entspricht der Breite d der Platten 19, 19' des ersten Klemmelementes 17. Die Platten 20, 20' des zweiten Klemmelementes besitzen in etwa die gleiche Größe. Durch das Klemmelement 18 verläuft eine Öffnung 36, die als ein Langloch ausgebildet ist. Das zweite Klemmelement 18 ist an der Führungsschiene 28 befestigt, in vorteilhafter Ausführung geschraubt. In montiertem Zustand der Motorkettensäge 1 ragt der Bolzen 22 durch die Öffnung 36 des zweiten Klemmelementes 18. Da die Öffnung 36 als Langloch ausgebildet ist, kann das zweite Klemmelement 18 mit der Führungsschiene 28 gegenüber dem Gehäuse 24 in Längsrichtung 11 verschoben werden und dadurch die Sägekette 7 gespannt werden. In montiertem Zustand der Klemmelemente 17, 18 greifen die Platten lamellenartig ineinander und übertragen Kräfte zwischen der Führungsschiene 28 und dem Gehäuse 24. In vorteilhafter Ausführung sind die Klemmelemente 17, 18 aus Edelstahl.

Die in den Figuren 11 und 12 gezeigten Klemmelemente 17, 18 entsprechen den obigen Ausführungen zu den Figuren 9 und 10. Dabei unterscheiden sich die Ausführungsbeispiele der Figuren 11 und 12 von denen der Figuren 9 und 10 lediglich darin, dass die Klemmelemente 17, 18 jeweils drei Platten 19, 19', 19", 20, 20', 20" umfassen. Im Ausführungsbeispiel sind die Platten 19, 19', 19" mittels Nieten, in alternativer vorteilhafter Ausführung mittels Schrauben miteinander verbunden. In vorteilhafter Ausführung kann das erste Klemmelement 17 auch einteilig in Form eines zweifach gefalzten Bleches ausgebildet sein. Das zweite Klemmelement 18 ist einteilig als zweifach gefalztes Blech ausgebildet. Durch die zusätzlichen Platten 19", 20" der Klemmelemente 17, 18 kann die übertragbare Kraft zwischen der Führungsschiene 28 und dem Gehäuse 24 erhöht werden. So kann bei geringer Klemmkraft des Spannelementes 3, beispielsweise bei werkzeugloser Spannung vom Bediener, eine dennoch ausreichende hohe Reibkraft zur Fixierung der Führungsschiene 28 am Gehäuse 24 erreicht werden.

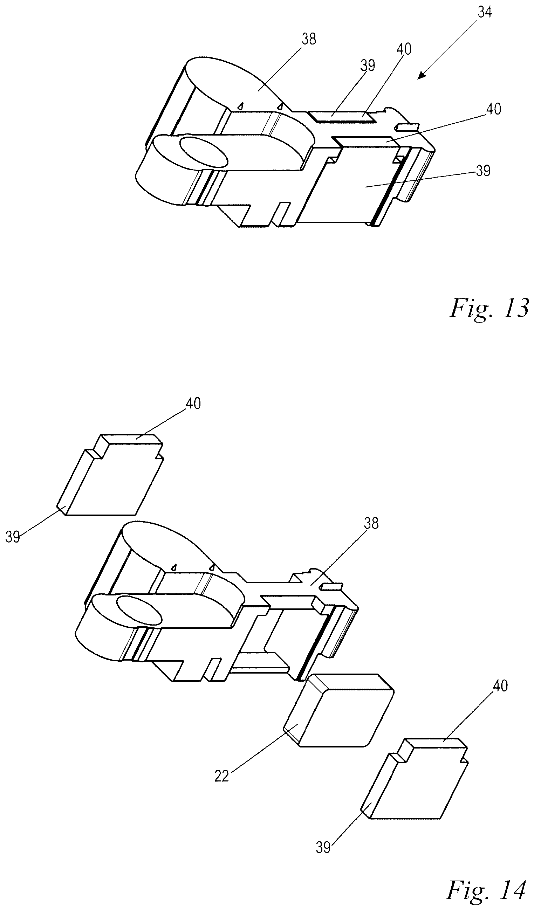

In den Figuren 13 und 14 ist die Magnetvorrichtung 34 gezeigt, wobei die Magnetvorrichtung 34 in Fig. 13 in montiertem Zustand und in Fig. 14 in demontiertem Zustand dargestellt ist. Im montiertem Zustand der Motorkettensäge 1 ist die Magnetvorrichtung 34 an dem Gehäuse 24 gehalten, in vorteilhafter Ausführung mit dem Gehäuse 24 verschraubt, insbesondere verklebt. Die Magnetvorrichtung 34 umfasst ein Magnetaufhahmeelement 38, zwei Anlageplatten 39 sowie einen Magneten 22 (siehe Fig. 14). Der Magnet 22 ist in dem Magnetaufhahmeelement 38 angeordnet und von diesem sowie von den am Magnetaufnahmeelement 38 befestigten Anlageplatten 39 umschlossen. Im Ausführungsbeispiel sind der Magnet 22 und die Anlageplatten 39 mit dem Magnetaufnahmeelement 38 verklebt, wobei in vorteilhafter Ausführung auch andere Befestigungen möglich sind. In vorteilhaftem Ausführungsbeispiel ist die Magnetvorrichtung 34 an dem Gehäuse 24 so angeordnet, dass zur Längsebene 10 gerichtete Enden 40 der Anlageplatten 39 in etwa in einer Ebene mit der Anlagefläche 12 des Gehäuses 24 liegen. Liegt die Führungsschiene 28 an der Anlagefläche 12 an, steht diese in Kontakt mit den Enden 40 der Anlageplatten 39 und wird auch bei gelöstem Spannelement 3 magnetisch gehalten. Die Magnetvorrichtung 34 ist vorteilhaft so gestaltet, dass sie den Bauraum einer nicht mehr benötigten Spannvorrichtung für die Sägekette 7 nutzt, vorzugsweise diesen ausfüllt. In vorteilhaften Ausführungen sind auch andere Magnetvorrichtungen oder andere Haltevorrichtungen zum Halten der Führungsschiene 28 möglich.

Zum Spannen der Sägekette 7 muss der Bediener lediglich die Mutter 16 lösen. Dadurch verringern sich die auf die Führungsschiene 28 wirkenden Klemmkräfte so weit, dass der Bediener die Führungsschiene 28 von Hand bis zur gewünschten Kettenspannung nach vorne, also vom Gehäuse 24 weg, ziehen kann. Der Magnet 22 hält die Führungsschiene 28 in dieser Position. Der Bediener kann dann die Mutter 16 wieder anziehen, und die Sägekette 7 ist gespannt. Auch bei der Montage der Führungsschiene 28 am Gehäuse 24 hält der Magnet 22 die Führungsschiene 28 in Position, bis der Gehäusedeckel 25 aufgesetzt und die Mutter 16 aufgeschraubt ist.

Nach der Erfindung ist die Führungsschiene 28 reibschlüssig an dem feststehenden Teil 2 fixiert. Eine formschlüssige Fixierung in Längsrichtung 11 ist nicht vorgesehen, so dass die Führungsschiene 28 bereits nach geringem Lösen der Mutter 16 unter Überwindung der noch herrschenden Reibkräfte in Längsrichtung 11 gegenüber dem feststehenden Teil 2 verschoben werden kann.

Klemmelemente 17, 18 gemäß der Erfindung können vorteilhaft bei allen Arten von Motorkettensägen, also bei Arbeitsgeräten, bei denen eine Sägekette 7 um eine Führungsschiene 28 umlaufend angetrieben ist, zum Einsatz kommen. Hierunter fallen beispielsweise auch Hochentaster oder dgl. Auch ein Einsatz zur Festlegung anderer Bauteile kann vorteilhaft sein.

In einem weiteren vorteilhaften Ausführungsbeispiel besitzt die Motorkettensäge 1 das bewegliche Teil 8, wobei das bewegliche Teil 8 die Führungsschiene 28 und das Klemmelement 18 umfasst. Das Klemmelement 18 ist an der Führungsschiene 28 in Längsrichtung 11 mit der Führungsschiene 28 fest verbunden befestigt. Das Klemmelement 18 kann hierzu beispielsweise einen Zapfen besitzen, der formschlüssig in eine Öffnung der Führungsschiene 28 ragt. Die Motorkettensäge 1 umfasst zusätzlich das feststehende Teil 2, wobei das feststehende Teil 2 das Gehäuse 24, das Klemmelement 17 und den Gehäusedeckel 25 umfasst. Das Klemmelement 17 ist an dem Gehäusedeckel 25 in Längsrichtung 11 mit dem Gehäusedeckel 25 fest verbunden befestigt. In montiertem Zustand der Führungsschiene 28 ist die Führungsschiene 28 zwischen dem Gehäusedeckel 25 und dem Gehäuse 24 gehalten. Vorteilhaft sind die Klemmelemente 17 und 18 an dem Gehäusedeckel 25 vormontiert und werden bei der Montage des Gehäusedeckels 25 mit dem Gehäusedeckel 25 auf die Führungsschiene 28 aufgesetzt.

Das Klemmelement 18 wird vorteilhaft beim Aufsetzen des Gehäusedeckels 25 in Längsrichtung 11 der Führungsschiene 25 fest mit der Führungsschiene 25 verbunden.

## Patentansprüche

1. Motorkettensäge mit einem Antriebsmotor (5), wobei der Antriebsmotor (5) eine auf einer Führungsschiene (28) umlaufende Sägekette (7) antreibt, wobei die Motorkettensäge (1) ein feststehendes Teil (2) aufweist, das den Antriebsmotor (5) umfasst, und wobei die Motorkettensäge (1) ein bewegliches Teil (8) aufweist, das die Führungsschiene (28) umfasst, wobei die Führungsschiene (28) an einem Ende (9) quer zu ihrer Längsebene (10) zwischen dem feststehenden Teil (2) und einem Spannelement (3) verspannt am feststehenden Teil (2) gehalten ist, wobei das bewegliche Teil (8) zum Spannen der Sägekette (7) bei gelöstem Spannelement (3) in einer Längsrichtung (11) der Führungsschiene (28) gegenüber dem feststehenden Teil (2) verschiebbar ist, wobei die Motorkettensäge (1) eine mit dem feststehenden Teil (2) in Längsrichtung (11) fest verbundene Anschlagsfläche (12) und eine mit dem feststehenden Teil (2) in Längsrichtung (11) fest verbundene Spannfläche (4) des Spannelements (3) aufweist, wobei die Motorkettensäge (1) mindestens zwei mit dem beweglichen Teil (8) in Längsrichtung (11) fest verbundene Kontaktflächen (14.1-14.12) besitzt, wobei eine Kontaktfläche (14.1) der mindestens zwei Kontaktflächen (14.1-14.12) an der Anschlagsfläche (12) und eine weitere Kontaktfläche (14.2) der mindestens zwei Kontaktflächen (14.1-14.12) an der Spannfläche (4) anliegt,
**dadurch gekennzeichnet, dass** zwischen der Anschlagsfläche (12) und der Spannfläche (4) mindestens eine zusätzliche mit dem feststehenden Teil (2) in Längsrichtung (11) fest verbundene Kontaktfläche (13.1-13.10) und mindestens eine zusätzliche mit dem beweglichen Teil (8) in Längsrichtung fest verbundene Kontaktfläche (14.2-14.12) angeordnet ist und dass alle Kontaktflächen (13.1-13.10, 14.1-14.12) im Kraftfluss vom Spannelement (3) zum feststehenden Teil (2) hintereinander liegen.

2. Motorkettensäge nach Anspruch 1,
**dadurch gekennzeichnet, dass** zwischen Anschlagsfläche (12) und Spannfläche (4) jeweils mindestens vier, insbesondere mindestens acht, mit dem feststehenden Teil (2) fest verbundene und mit dem beweglichen Teil (8) fest verbundene Kontaktflächen (13.1-13.10, 14.3-14.12) angeordnet sind.

3. Motorkettensäge nach Anspruch 1 oder 2,
**dadurch gekennzeichnet, dass** die Kontaktflächen (13.1-13.10, 14.1-14.12) bei gespanntem Spannelement (3) parallel zur Längsebene (10) der Führungsschiene (28) verlaufen.

4. Motorkettensäge nach einem der Ansprüche 1 bis 3,
**dadurch gekennzeichnet, dass** die Kontaktflächen (13.1-13.10, 14.1-14.12) in einer Schnittebene senkrecht zur Längsebene (10) nebeneinander angeordnet sind.

5. Motorkettensäge nach einem der Ansprüche 1 bis 4,
**dadurch gekennzeichnet, dass** die Motorkettensäge (1) mindestens ein erstes Klemmelement (17) und ein zweites Klemmelement (18) umfasst, wobei an dem ersten Klemmelement (17) mit dem feststehenden Teil (2) in Längsrichtung (11) fest verbundene Kontaktflächen (13.1-13.10) und an dem zweiten Klemmelement (18) mit dem beweglichen Teil (8) in Längsrichtung (11) fest verbundene Kontaktflächen (14.3-14.12) ausgebildet sind.

6. Motorkettensäge nach Anspruch 5,
**dadurch gekennzeichnet, dass** die Klemmelemente (17, 18) jeweils eine senkrecht zur Längsebene (10) gemessene Breite (b, b', c, c') besitzen, wobei die Breite (b', c') der Klemmelemente (17, 18) bei gelöstem Spannelement (3) jeweils größer als die Breite (b, c) der Klemmelemente (17, 18) bei verspanntem Spannelement (3) ist.

7. Motorkettensäge nach Anspruch 5 oder 6,
**dadurch gekennzeichnet, dass** die Klemmelemente (17, 18) jeweils mindestens eine zur Längsebene (10) parallel verlaufende Platte (19, 19', 19", 20, 20', 20") umfassen.

8. Motorkettensäge nach einem der Ansprüche 5 bis 7,
**dadurch gekennzeichnet, dass** die Klemmelemente (17, 18) jeweils mindestens zwei zur Längsebene (10) parallel verlaufende Platten (19, 19', 19", 20, 20', 20") umfassen und dass die mindestens zwei Platten (19, 19', 19") des ersten Klemmelementes (17) mit den mindestens zwei Platten (20, 20', 20") des zweiten Klemmelementes (18) lamellenartig ineinandergreifen.

9. Motorkettensäge nach Anspruch 7 oder 8,
**dadurch gekennzeichnet, dass** die Breite (d) der Platten (19, 19', 19", 20, 20', 20") der Klemmelemente (17, 18) jeweils kleiner als die Länge (l) und als die Höhe (h) der Platten (19, 19', 19", 20, 20', 20") ist.

10. Motorkettensäge nach einem der Ansprüche 7 bis 9,
**dadurch gekennzeichnet, dass** die Platten (19, 19', 19", 20, 20', 20") elastisch sind.

11. Motorkettensäge nach einem der Ansprüche 5 bis 10,
**dadurch gekennzeichnet, dass** das erste Klemmelement (17) und/oder das zweite Klemmelement (18) gefalzt ist.

12. Motorkettensäge nach einem der Ansprüche 5 bis 11,
**dadurch gekennzeichnet, dass** das erste Klemmelement (17) und/oder das zweite Klemmelement (18) aus Edelstahl ist.

13. Motorkettensäge nach einem der Ansprüche 5 bis 12,
**dadurch gekennzeichnet, dass** ein Bolzen (22) durch das erste Klemmelement (17) ragt, und dass das erste Klemmelement (17) über den Bolzen (22) in Längsrichtung (11) fixiert an dem feststehenden Teil (2) gehalten ist.

14. Motorkettensäge nach einem der Ansprüche 5 bis 13,
**dadurch gekennzeichnet, dass** das erste Klemmelement (17) mittels einer Feder (20) in Längsrichtung (11) spielfrei an dem feststehenden Teil gehalten ist.

15. Motorkettensäge nach einem der Ansprüche 1 bis 14,
**dadurch gekennzeichnet, dass** im feststehenden Teil (2) ein Magnet (22) zum Halten des beweglichen Teils am feststehenden Teil (2) bei gelöstem Spannelement (3) angeordnet ist.

## Claims

1. Chainsaw having a drive motor (5), wherein the drive motor (5) drives a saw chain (7) circulating on a guide bar (28), wherein the chainsaw (1) has a fixed part (2) which comprises the drive motor (5), and wherein the chainsaw (1) has a movable part (8) which comprises the guide bar (28), wherein the guide bar (28) is retained on the fixed part (2) at one end (9) in a manner braced between the fixed part (2) and a tensioning element (3) transversely to its longitudinal plane (10), wherein the movable part (8) is shiftable in a longitudinal direction (11) of the guide bar (28) with respect to the fixed part (2) in order to tension the saw chain (7) with the tensioning element (3) released, wherein the chainsaw (1) has a stop face (12) that is firmly connected to the fixed part (2) in the longitudinal direction (11), and a tensioning face (4) of the tensioning element (3), said tensioning face (4) being firmly connected to the fixed part (2) in the longitudinal direction (11), wherein the chainsaw (1) has at least two contact faces (14.1-14.12) that are firmly connected to the movable part (8) in the longitudinal direction (11), wherein one contact face (14.1) of the at least two contact faces (14.1-14.12) bears against the stop face (12) and a further contact face (14.2) of the at least two contact faces (14.1-14.12) bears against the tensioning face (4),
**characterized in that** at least one additional contact face (13.1-13.10) that is firmly connected to the fixed part (2) in the longitudinal direction (11) and at least one additional contact face (14.2-14.12) that is firmly connected to the movable part (8) in the longitudinal direction are arranged between the stop face (12) and the tensioning face (4), and **in that** all the contact faces (13.1-13.10, 14.1-14.12) lie one after another in the flux of force from the tensioning element (3) to the fixed part (2).

2. Chainsaw according to claim 1,
**characterized in that** in each case at least four, in particular at least eight, contact faces (13.1-13.10, 14.3-14.12) that are firmly connected to the fixed part (2) and firmly connected to the movable part (8) are arranged between the stop face (12) and tensioning face (4).

3. Chainsaw according to claim 1 or 2,
**characterized in that** the contact faces (13.1-13.10, 14.1-14.12) extend parallel to the longitudinal plane (10) of the guide bar (28) with the tensioning element (3) tensioned.

4. Chainsaw according to any of claims 1 to 3,
**characterized in that** the contact faces (13.1-13.10, 14.1-14.12) are arranged alongside one another in a section plane perpendicular to the longitudinal plane (10).

5. Chainsaw according to any of claims 1 to 4,
**characterized in that** the chainsaw (1) comprises at least one first clamping element (17) and a second clamping element (18), wherein contact faces (13.1-13.10) that are firmly connected to the fixed part (2) in the longitudinal direction (11) are formed on the first clamping element (17) and contact faces (14.3-14.12) that are firmly connected to the movable part (8) in the longitudinal direction (11) are formed on the second clamping element (18).

6. Chainsaw according to claim 5,
**characterized in that** the clamping elements (17, 18) each have a width (b, b', c, c') measured perpendicularly to the longitudinal plane (10), wherein the width (b', c') of the clamping elements (17, 18) with the tensioning element (3) released is in each case greater than the width (b, c) of the clamping elements (17, 18) with the tensioning element (3) tensioned.

7. Chainsaw according to claim 5 or 6,
**characterized in that** the clamping elements (17, 18) each comprise at least one plate (19, 19', 19", 20, 20', 20") extending parallel to the longitudinal plane (10).

8. Chainsaw according to any of claims 5 to 7,
**characterized in that** the clamping elements (17, 18) each comprise at least two plates (19, 19', 19", 20, 20', 20") extending parallel to the longitudinal plane (10), and **in that** the at least two plates (19, 19', 19") of the first clamping element (17) and the at least two plates (20, 20', 20") of the second clamping element (18) engage in one another in a lamellar manner.

9. Chainsaw according to claim 7 or 8,
**characterized in that** the width (d) of the plates (19, 19', 19", 20, 20', 20") of the clamping elements (17, 18) is in each case less than the length (l) and than the height (h) of the plates (19, 19', 19", 20, 20', 20").

10. Chainsaw according to any of claims 7 to 9,
**characterized in that** the plates (19, 19', 19", 20, 20', 20") are resilient.

11. Chainsaw according to any of claims 5 to 10,
**characterized in that** the first clamping element (17) and/or the second clamping element (18) is folded.

12. Chainsaw according to any of claims 5 to 11,
**characterized in that** the first clamping element (17) and/or the second clamping element (18) is made of stainless steel.

13. Chainsaw according to any of claims 5 to 12,
**characterized in that** a bolt (22) projects through the first clamping element (17), and **in that** the first clamping element (17) is retained securely on the fixed part (2) in the longitudinal direction (11) via the bolt (22).

14. Chainsaw according to any of claims 5 to 13,
**characterized in that** the first clamping element (17) is retained on the fixed part in a play-free manner in the longitudinal direction (11) by means of a spring (20).

15. Chainsaw according to any of claims 1 to 14,
**characterized in that** a magnet (22) for retaining the movable part on the fixed part (2) with the tensioning element (3) released is arranged in the fixed part (2).

## Revendications

1. Scie à chaîne motorisée comportant un moteur d'entraînement (5), le moteur d'entraînement (5) entraînant une chaîne de sciage (7) circulant sur un rail de guidage (28), la scie à chaîne motorisée (1) comprenant une partie fixe (2) qui comporte le moteur d'entraînement (5), et la scie à chaîne motorisée (1) comprenant une partie mobile (8) qui comporte le rail de guidage (28), le rail de guidage (28) étant retenu sur la partie fixe (2) à une extrémité (9) de manière serrée entre la partie fixe (2) et un élément tendeur (3) transversalement à son plan longitudinal (10), la partie mobile (8) étant déplaçable par rapport à la partie fixe (2) dans une direction longitudinale (11) du rail de guidage (28) pour la mise en tension de la chaîne de sciage (7) lorsque l'élément tendeur (3) est relâché, la scie à chaîne motorisée (1) comprenant une surface de butée (12) reliée fixement à la partie fixe (2) dans la direction longitudinale (11) et une surface de tension (4) de l'élément tendeur (3) reliée fixement à la partie fixe (2) dans la direction longitudinale (11), la scie à chaîne motorisée (1) présentant au moins deux surfaces de contact (14.1-14.12) reliées fixement à la partie mobile (8) dans la direction longitudinale (11), une surface de contact (14.1) des au moins deux surfaces de contact (14.1-14.12) s'appuyant contre la surface de butée (12) et une autre surface de contact (14.2) des au moins deux surfaces de contact (14.1-14.12) s'appuyant contre la surface de tension (4),
**caractérisée en ce qu'**au moins une surface de contact (13.1-13.10) supplémentaire reliée fixement à la partie fixe (2) dans la direction longitudinale (11) et au moins une surface de contact (14.2-14.12) supplémentaire reliée fixement à la partie mobile (8) dans la direction longitudinale sont disposées entre la surface de butée (12) et la surface de tension (4), et **en ce que** toutes les surfaces de contact (13.1-13.10, 14.1-14.12) se situent les unes derrière les autres dans le flux de force de l'élément tendeur (3) à la partie fixe (2).

2. Scie à chaîne motorisée selon la revendication 1,
**caractérisée en ce que** respectivement au moins quatre, en particulier au moins huit surfaces de contact (13.1-13.10, 14.3-14.12) reliées fixement à la partie fixe (2) et reliées fixement à la partie mobile (8) sont disposées entre la surface de butée (12) et la surface de tension (4).

3. Scie à chaîne motorisée selon la revendication 1 ou 2,
**caractérisée en ce que** les surfaces de contact (13.1-13.10, 14.1-14.12) s'étendent parallèlement au plan longitudinal (10) du rail de guidage (28) lorsque l'élément tendeur (3) est tendu.

4. Scie à chaîne motorisée selon l'une des revendications 1 à 3,
**caractérisée en ce que** les surfaces de contact (13.1-13.10, 14.1-14.12) sont disposées les unes à côté des autres dans un plan de coupe perpendiculaire au plan longitudinal (10).

5. Scie à chaîne motorisée selon l'une des revendications 1 à 4,
**caractérisée en ce que** la scie à chaîne motorisée (1) comporte au moins un premier élément de serrage (17) et un deuxième élément de serrage (18), des surfaces de contact (13.1-13.10) reliées fixement à la partie fixe (2) dans la direction longitudinale (11) étant réalisées sur le premier élément de serrage (17) et des surfaces de contact (14.3-14.12) reliées fixement à la partie mobile (8) dans la direction longitudinale (11) étant réalisées sur le deuxième élément de serrage (18).

6. Scie à chaîne motorisée selon la revendication 5,
**caractérisée en ce que** les éléments de serrage (17, 18) présentent respectivement une largeur (b, b', c, c') mesurée perpendiculairement au plan longitudinal (10), la largeur (b', c') des éléments de serrage (17, 18) lorsque l'élément tendeur (3) est relâché étant respectivement supérieure à la largeur (b, c) des éléments de serrage (17, 18) lorsque l'élément tendeur (3) est tendu.

7. Scie à chaîne motorisée selon la revendication 5 ou 6,
**caractérisée en ce que** les éléments de serrage (17, 18) comportent respectivement au moins une plaque (19, 19', 19", 20, 20', 20") s'étendant parallèlement au plan longitudinal (10).

8. Scie à chaîne motorisée selon l'une des revendications 5 à 7,
**caractérisée en ce que** les éléments de serrage (17, 18) comportent respectivement au moins deux plaques (19, 19', 19", 20, 20', 20") s'étendant parallèlement au plan longitudinal (10) et **en ce que** les au moins deux plaques (19, 19', 19") du premier élément de serrage (17) et les au moins deux plaques (20, 20', 20") du deuxième élément de serrage (18) s'interpénètrent à la manière de lamelles.

9. Scie à chaîne motorisée selon la revendication 7 ou 8,
**caractérisée en ce que** la largeur (d) des plaques (19, 19', 19", 20, 20', 20") des éléments de serrage (17, 18) est respectivement inférieure à la longueur (1) et à la hauteur (h) des plaques (19, 19', 19", 20, 20', 20").

10. Scie à chaîne motorisée selon l'une des revendications 7 à 9,
**caractérisée en ce que** les plaques (19, 19', 19", 20, 20', 20") sont élastiques.

11. Scie à chaîne motorisée selon l'une des revendications 5 à 10,
**caractérisée en ce que** le premier élément de serrage (17) et/ou le deuxième élément de serrage (18) est/sont plié(s).

12. Scie à chaîne motorisée selon l'une des revendications 5 à 11,
**caractérisée en ce que** le premier élément de serrage (17) et/ou le deuxième élément de serrage (18) est/sont constitué(s) d'acier inoxydable.

13. Scie à chaîne motorisée selon l'une des revendications 5 à 12,
**caractérisée en ce qu'**un boulon (22) fait saillie à travers le premier élément de serrage (17), et **en ce que** le premier élément de serrage (17) est retenu de manière fixée sur la partie fixe (2) dans la direction longitudinale (11) par le biais du boulon (22).

14. Scie à chaîne motorisée selon l'une des revendications 5 à 13,
**caractérisée en ce que** le premier élément de serrage (17) est retenu sans jeu sur la partie fixe dans la direction longitudinale (11) au moyen d'un ressort (20).

15. Scie à chaîne motorisée selon l'une des revendications 1 à 14,
**caractérisée en ce qu'**un aimant (22) servant à retenir la partie mobile sur la partie fixe (2) lorsque l'élément tendeur (3) est relâché est disposé dans la partie fixe (2).
